Europäisches Patentamt

European Patent Office

Office européen des brevets

(19)

(11) EP 0 776 097 A2

## (12) EUROPEAN PATENT APPLICATION

(43) Date of publication:
28.05.1997 Bulletin 1997/22

(51) Int Cl.6: H04B 1/38

(21) Application number: 96402502.7

(22) Date of filing: 21.11.1996

(84) Designated Contracting States:
BE DE FR GB NL

(30) Priority: 23.11.1995 IL 11610395

(71) Applicant: Wireless Links International Ltd.
Tel-Aviv 69714 (IL)

(72) Inventor: Shayovitch, Josef
Ramat Hasharon 47240 (IL)

(74) Representative: Joly, Jean-Jacques et al
Cabinet Beau de Loménie
158, rue de l'Université
75340 Paris Cédex 07 (FR)

### (54) Mobile data terminals with text-to-speech capability

(57) A mobile data terminal mountable on a mobile platform for transmitting, receiving and converting text data strings into an audible signals. The mobile data terminal comprises a radio modem (7) for receiving text data strings through a communication network and a memory (9) for storing the received data strings. The text data strings are associated with pre-stored speech segments for generating audible signals representative of the speech segments.

Fig.2

## Description

## FIELD AND BACKGROUND OF THE INVENTION

The present invention relates to the field of mobile data terminals.

Mobile services such as, for example, trucking and courier services are required to maintain some form of communication channel with their dispatcher in order to receive instructions, on the one hand, and to update the dispatcher as to their location and service activities, on the other. The data transferred, in both directions, is referred to as mobile data and the mobile units that transmit and receive the mobile data are known as Mobile Data Terminals (MDT's). Generally, text data received by an MDT from a dispatcher is displayed on a screen just as in a paging device. The displayed message is replied to by depressing a suitable reply key on a key board. Each key corresponds to a standard message for responding to the displayed message. Conventional MDTs are available from such companies as Glanair; Racotec; Ericsson, NJ; Coded Communications, Los Angeles, CA; Motorola, Chicago, IL.

The received text data displayed on an MDT has to be read by the user which is dangerous if he/she is driving at the time. In fact, trying to read whilst driving has resulted in fatalities. Clearly then, there is a necessity for providing the mobile user with the option of hearing the received text data. The process wherein text data is converted to an audio signal representative of a human voice is known as "text-to-speech" conversion. Text-to-speech conversion is known in the art and has been applied to stationary equipment (see, e.g., "Best Speech™" T-T-S, copyright 1991, Berkeley Speech Technologies Inc., U.S.A.) using a synthesized voice. However, there are no known applications of text-to-speech technologies to mobile systems.

There is accordingly a long felt need to incorporate a text-to-speech capability in conventional mobile data terminals.

## SUMMARY OF THE INVENTION

It is an object of the present invention to provide a Mobile Data Terminal that displays a received message visually and additionally converts it to an audible signal in the form of a human voice (speech) or a synthesized voice.

In accordance with the first aspect of the present invention there is provided a mobile data terminal for receiving and converting transmission data indicative of text data strings into an audible signal comprising:

a receiver for receiving said transmission data through a communication network;
a first memory for storing said received transmission data;
a processor for obtaining from said stored transmission data speech segments corresponding to said text data strings; and
an audio generator for generating audible signals representative of said speech segments.

Generally, said transmission data includes data indicative of words.
If desired, said transmission data includes data indicative of speech segments.
Further if desired, said speech segments are phonemes.

The transmission data is indicative of text data strings which in general include text and/or speech segment information. However, this is by no means binding and it is conceivable that the transmission data also contain other data representative of text data strings such as, for example, text segments.

If desired, said transmission data includes data indicative of text segments and said data indicative of text segments are associated with at least one of syllables and words.

Preferably, said communication network is associated with at least one of Cellular Digital Packet Data (CDPD), satellite, Mobitex data, Ardis data, Specialized Mobile Radio, GSM, PCS.

If desired, said communication network is a wired network.

In the following description and claims, reference is made to the terms data compression and data coding. The term data compression is understood to refer to all content insensitive techniques whereby a given stream of data, independent of its contents, is bitwise compressed. The term data coding is understood to refer to all content sensitive techniques whereby a given stream of data is compressed with reference to specific qualities of the data contents. A nonbinding example of data compression is the Ziv-Lempel technique. A nonbinding example of data coding of a data stream containing text data (e.g., words, speech segments, text segments, or any combination thereof) would be to associate with each of the contents of the data stream, or a combination thereof, a code (e.g., a number). Data coding employs a look up table whose contents are text data and their associated codes. It will be appreciated that the procedure of coding also covers the possibility of encryption of the text data.

Preferably, said transmission data is coded. If the transmission data is coded the mobile data terminal further includes a decoder, and The coded transmission data is decoded in the mobile data terminal.

Generally, said words are classified to at least two groups, a first group including a priori known words, constituting first group words, and a second group including new words, constituting second group words, and wherein the transmission data with respect to each one of the first group words is a code representative of speech segments that correspond to a complete first group word, and the transmission data with respect to each one of the second group words is at least one code representative of respective at least one speech segment that correspond to at least a portion of said second group word.

If desired, speech segments that correspond to a first group word are extracted from said coded transmission data and said mobile data terminal further includes a feeder for feeding said extracted speech segments to said audio generator for generating audio signals representative of said speech segments.

Alternatively, speech segments that correspond to a second group word are extracted from said coded transmission data and said mobile data terminal further includes a feeder for feeding said extracted speech segments to said audio generator for generating audio signals representative of said speech segments.

Preferably, said audible signals are associated with at least one of synthesized speech signals, speech signals.

Coding and compression can be used advantageously in combination. A text data string can be reduced in bit length by coding it. The coded text data string can then further be reduced in length by compressing it.

If desired, said transmission data is compressed and the mobile data terminal further comprises a decompressor for decompressing the compressed transmission data.

Optionally, the mobile data terminal further comprises:

a transmitter for transmitting transmission data;
a coder for coding transmission data; and
a compressor for compressing transmission data.

In accordance with a second aspect of the present invention, there is provided a method for transmitting, receiving and converting transmission data indicative of text data strings originated by or received from a first device, into audible signals indicative of said data text strings in at least one second device; either or both of said first device and the at least one second device being a portable wireless communication device mountable on a mobile platform; at least one of said first device and said second device includes a table of speech segments corresponding each to a word or a portion thereof; the method comprising the following steps:

(i) reducing said text data strings to words;
(ii) associating with said words corresponding speech segments;
(iii) transmitting through a communication network from said first device to the at least one second device said transmission data;
(iv) receiving, through said communication network, in the or each second device said transmission data;
(v) generating in said at least one second device audio signals representative of said speech segments.

If desired, said step (i) is executed in said first device.

Further if desired, said step (ii) is executed in said first device.

Alternatively, said step (ii) is executed in said at least one second device.

Optionally, said steps (i) and (ii) are executed in said at least one second device.

It should be appreciated that either of the steps (i) and (ii) can be carried out partially in the first device and partially in the at least one second device.

If desired, said transmission data includes data indicative of words.

Also if desired, said transmission data includes data indicative of speech segments.

Further if desired, said transmission data includes data indicative of text segments and said data indicative of text segments are associated with at least one of syllables and words.

Preferably, said communication network is associated with at least one of Cellular Digital Packet Data (CDPD), satellite, Mobitex data, Ardis data, Specialized Mobile Radio, GSM, PCS.

If desired, said communication network is a wired network.

Preferably, said transmission data is coded, wherein said coded transmission data is decoded in said at least one second device.

Preferably, said transmission data is also compressed.

Generally, said words are classified to at least two groups, a first group including a priori known words, constituting a first group words, and a second group including new words, constituting second group words, and wherein the transmission data with respect to each one of the first group words is a code representative of speech segments that correspond to a complete first group word, and the transmission data with respect to each one of the second group words is at least one code representative of a respective at least one speech segment that corresponds to at least a portion of said second group word.

If desired, said audible signals are associated with at least one of synthesized speech signals, speech signals.

If desired, said speech segments are phonemes.

In some circumstances it may be convenient that the transmission data wholly comprises words, whereas in others it may comprise speech segments. On the other hand it is often desirable that the transmission data comprise both words and speech segments. The latter case is especially true of frequently used words. To reduce air time costs it is preferable to code the messages by coding both the word and its speech segments in one code. On the other hand for words that are not frequently used it is advantageous to code messages by coding speech segments but not the words. Since coding and decoding entail the storage of look-up tables the number of codes that can be stored will be determined by memory constraints.

It should be noted that in the present invention transmission data is preferably wirelessly transmitted and received but can also be transmitted and received by wire. The final product is an audio signal indicative of the transmission data. This should be compared with a similar scenario in which the same text is transmitted as an audio signal, typically in coded form. Transmitting a message as an audio signal requires a much larger bandwidth than transmitting the same message as an equivalent text string or transmission data incorporating the text string and its associated speech segments. Hence, in accordance with the present invention a much smaller bandwidth is required to transmit a given message than would be required when using conventional audio transmission techniques for the same message.

In view of the ever growing demand for the allocation of frequency bands for communications and the resulting overcrowding of the usable spectrum, it is readily appreciated that the present invention presents an effective way of reducing the demand for wide frequency bands. Furthermore, the compression of the text data and/or speech segments considerably reduces air time costs.

It should be noted that for convenience and simplicity of illustration the order in which the steps of the method of the invention are carried out are not necessarily as specified.

**BRIEF DESCRIPTION OF THE DRAWINGS**

For a better understanding the invention will now be described, by way of example only, with reference to the accompanying drawings and appendix in which:

**Fig. 1** Illustrates a typical scenario for transmitting data from a dispatcher to a mobile data terminal;
**Fig. 2** Shows a schematic block diagram of a the structure of a typical Mobile Data Terminal;
**Fig. 3** Shows a generalized block diagram of the text-to-speech procedure;
**Fig. 4** Illustrates a typical scenario for transmitting data from a mobile data terminal to a dispatcher;
**Fig. 5** Illustrates a typical scenario for transmitting data from one mobile data terminal to another mobile data terminal;
**Fig. 6** Shows a schematic block diagram of the main steps involved in transmitting a coded message string; and
**Fig. 7** Shows a schematic block diagram of the main steps involved in receiving and displaying a coded message string.

**DETAILED DESCRIPTION OF THE INVENTION**

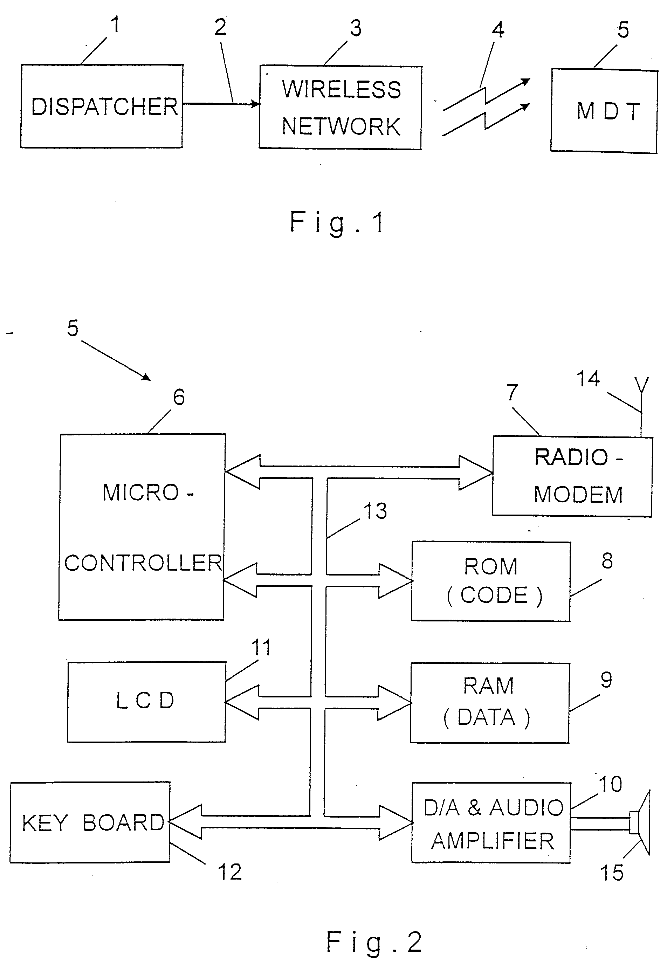

Attention is first drawn to Fig. 1 illustrating a typical scenario for transmitting data from a dispatcher to a mobile data terminal. A dispatcher **1** prepares a message, i.e. transmission data, in the form of text data, which is conveyed via an X.25, a leased line or a radio link **2** to a communication network **3**, from where it is broadcast. The broadcasted text data (i.e., transmission data) **4** is received by a Mobile Data Terminal **5**. The transmission data **4** is indicative of text data strings which in general include words, syllables, speech segments, text segments or any combination thereof.

Communication network **3** is preferably a wireless network such as one of the following: Cellular Digital Packet Data (CDPD), satellite, Mobitex data, Ardis data, Specialized Mobile Radio, GSM, PCS. However, a wired communication network such as a telephone system can also be used by connecting the MDT **5** to a telephone outlet socket.

Attention is now drawn to Fig. 2 showing a schematic block diagram of the structure of a typical MDT **5**. A microcontroller **6** (e.g. a micro processor of the 80C51 family, commercially available from, e.g., Motorola or Intel) controls all the peripheral devices: the radio modem **7**, which serves as a receiver for the transmission data, the Read Only Memory (ROM) **8**, the Random Access Memory (RAM) **9**, the audio generator **10** consisting of a digital-to-analog circuit and an audio amplifier, the Liquid Crystal Display (LCD) **11** and the keyboard **12**. Also shown is an antenna **14** and a loudspeaker **15**. The controller **6** is connected to the peripheral devices by a bus **13**.

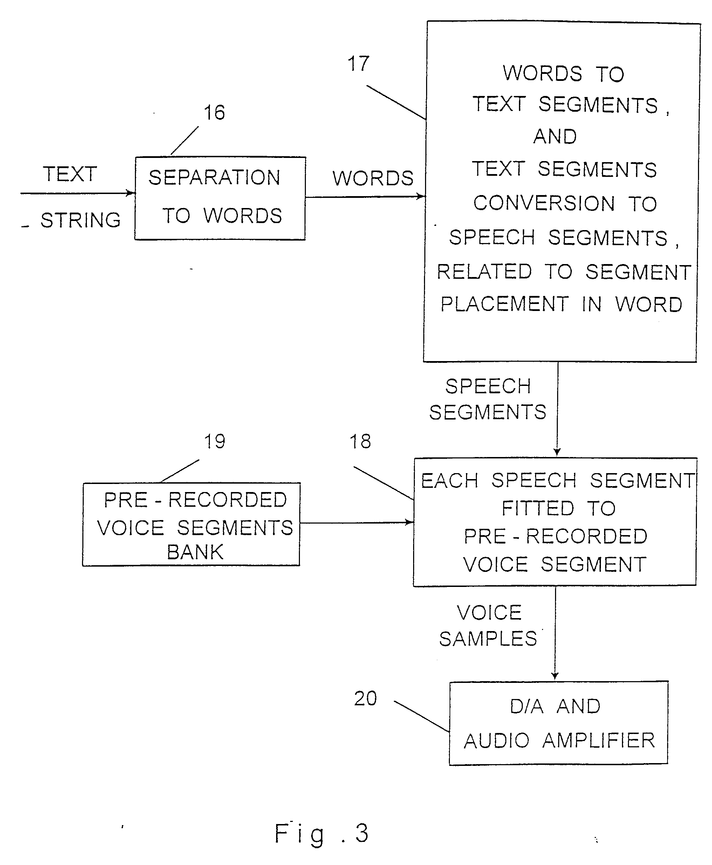

The text-to-speech procedure will now be described with reference to Fig. 3 showing a generalized block diagram of the procedure, and occasionally also to Fig. 2. A text string received by the antenna **14** is transferred to, and stored in the memory **8**. Each sentence is broken down into words **16**, by employing the space between the words as a criterion for defining a word in a sentence. In the next stage, **17**, the words are parsed into text segments by known *per se* techniques. An example of a text-to-speech table for converting the text segments to speech segments is given in the appendix. The text-to-speech conversion table is searched for text segments that match the left hand side of the table. Speech segments corresponding to these text segments appear on the right hand side enclosed in quotes. For example, consider the word EXCELLENT. The text segments matching this word, and the corresponding speech segments are:

E = //E// = 'EH'
X = //X// = 'K-S'
C = //C/+/ = 'S'
E = //E// = 'EH'
L = //L// " 'L'
L = /L/L// = "
E = //E// = 'EH'
N = //N// = 'N'
T = //T// = 'T'.

The operations of breaking down, or separation, of each sentence in the received text string, into words, the parsing of the words into text segments and the obtaining of the associated speech segments from the text-to-speech table is performed by the micro-controller (processor) **6**.

In order to establish where to stress the word, a possible, but by no means exhaustive, rule would be to parse the word as follows: EX - CEL - LENT. According to this rule the third syllable from the end is stressed when pronouncing the word. In the next stage, each speech segment is associated, **18**, with a prerecorded voice segment **19** located in the memory **8**. The associated prerecorded voice segments are fed successively by a feeder, incorporated in the micro-controller **6**,to the audio generator (**10** in Fig. 2 and **20** in Fig. 3) and henceforth to the loudspeaker **15** to give rise to a continuous voice signal representative of the original received text string. The operator of the MDT may choose between a visual display of the message on the LCD **11**, or an audio rendering of the message via the loudspeaker **15**, or both, by the appropriate depression of keys on the keyboard **12**.

The application of speech-to-text conversion as applied to an MDT is not limited to the transmission of simple text files from the dispatcher to the mobile worker but can clearly be applied to an Internet connection wherein electronic mail is sent to the mobile worker.

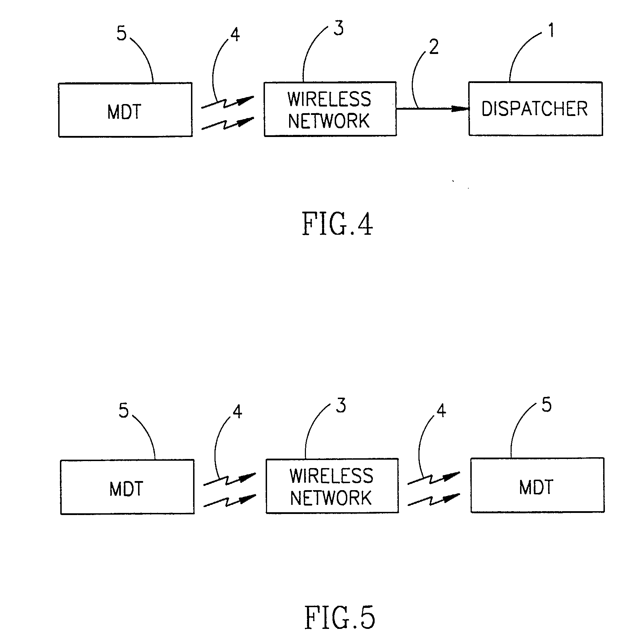

The text-to-speech procedure as described with reference to Fig. 3 is a general procedure and is by no means restricted to a message sent from a dispatcher to an MDT as shown in Fig. 1 but can be also applied to a message sent from an MDT to a dispatcher, as shown in Fig. 4, or from one MDT to another as shown in Fig. 5.

In practice the transmission, or broadcasting, of a text string can be costly, especially when a large number of MDT's (say several thousand) is involved. Since messages sent between dispatchers and MDT's and between MDT's use, in general, a well defined vocabulary one possible way of reducing communication expenses would be to code the words in such a way that the coded message is shorter than the original text message. This can be attained by ensuring that the code for each word has a smaller bit than the total bit length occupied by the word. Coding and ensuing decoding of transmission data is performed by a coder and decoder, respectively, which are incorporated in micro-controller **6** (Fig. 2).

Coding then reduces the number of bytes of information to be transmitted for a given message, thereby reducing air time costs which are a function of the number of bytes transmitted.

In accordance with a preferred embodiment the coding is based upon classifying words into three categories: frequently used words, infrequently used words and words that do not fall into the first two categories. For convenience three tables of coding lists are defined. List A, contains frequently used words together with their speech segments and code. List B, contains infrequently used words and their speech segments but no code, and list C contains a list of speech segments and codes, for constructing words that belong neither to list A or list B. It should be noted that in all cases the term "speech segment" should be understood to include the case of phonemes. Tables 1, 2 and 3 illustrate examples of lists A, B and C respectively.

In accordance with this embodiment each code is represented by two bytes of information. A word belonging to list A is given a "classification bit" having a value of 1 which is added to the most significant bit (MSB) of the code. Since a byte contains 8 bits and the classification bit takes up 1 bit a code has only 15 bits free for code information. This means that list A can contain a total of $2^{15}=32$ K codes representing 32 K words.

A word that does not belong to list A is given a classification bit having a value of zero and therefore its code's MSB remains unchanged.

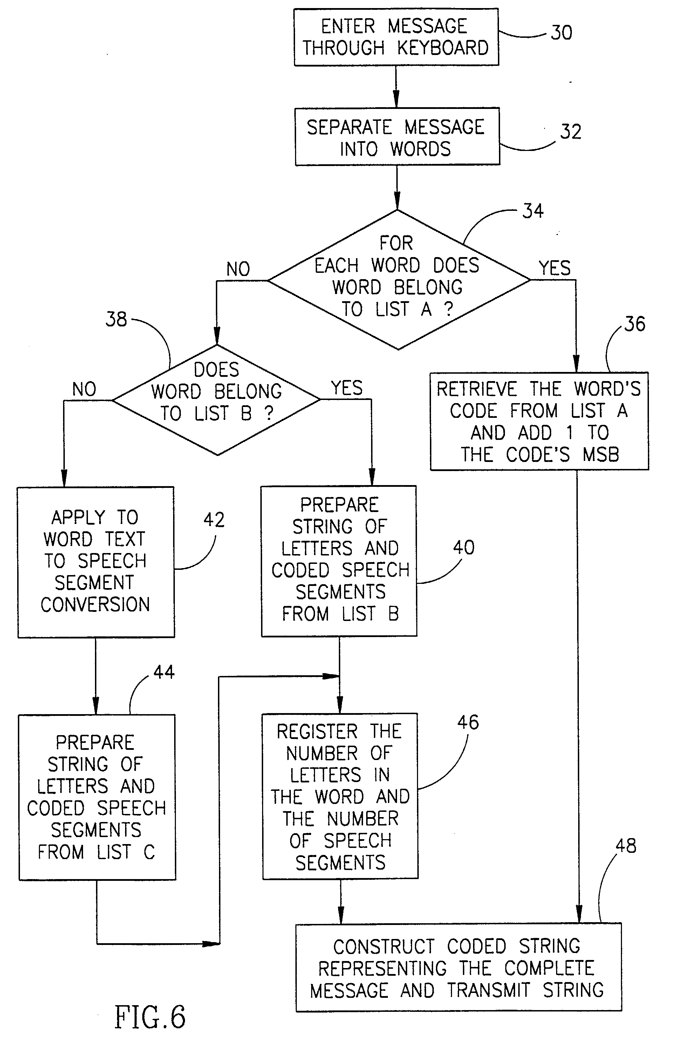

The method for transmitting a coded message, or partially coded message, is illustrated in Fig. 6. The message is entered through a keyboard (step 30). The message is broken down into separate words (step 32) and each word in the message is checked to determine whether it belongs to list A (step 34). If the word does belong to list A, then the code representing the word is retrieved from list A and a 1 is added to the code's MSB (step 36).

If the word does not belong to list A, then it is checked to see if it belongs to list B (step 38). If the word does belong to list B then a string of letters is prepared and the word's speech segments are retrieved from list B (step 40). If the word does not belong to list B, then a text-to-speech segment procedure is applied to the word (step 42). One possible procedure for converting words to speech segments is that described with reference to Fig. 3, step **17**. A string of letters of the word is now prepared together with the speech segment's code which are retrieved from list C (step 44). Whether the words belong to list B or not, the number of letters in the word and the number of speech segments is registered (step 46). Finally, together with coded words that belong to list A, a complete coded string (or partially coded string) of the message is constructed and transmitted (step 48).

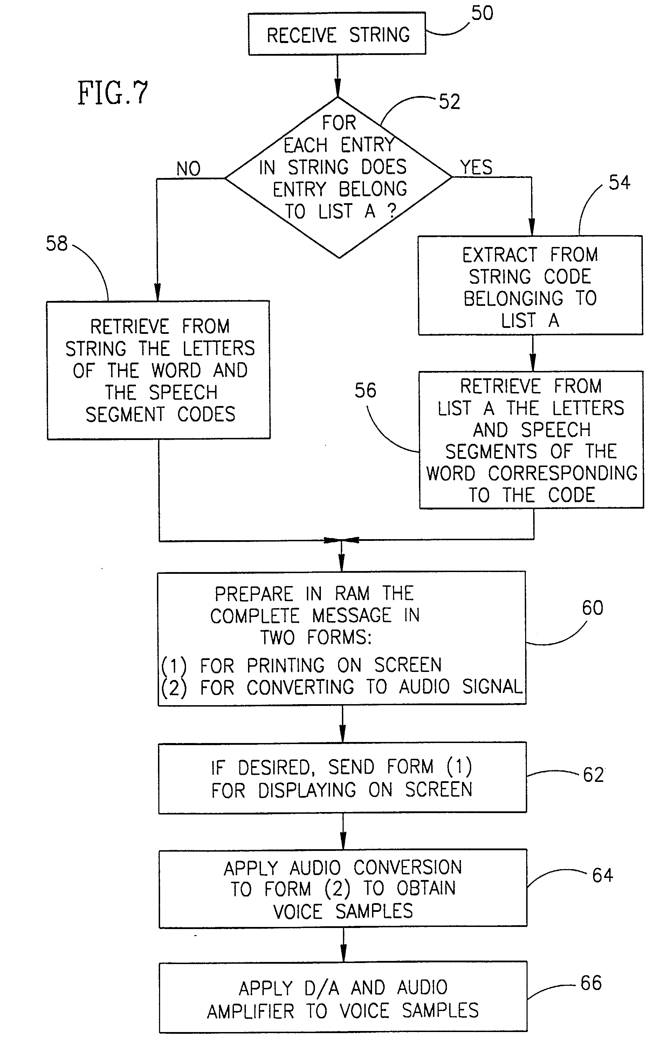

The method for receiving a coded. or partially coded, message and converting it to text or audio form is illustrated in Fig. 7. The string is received (step 50) and a check is carried out for entries in the string belonging to list A (step 52). If the MSB of an entry being checked is equal to 1, then the entry is coded and belongs to list A and the code for the word belonging to list A is extracted from the string (step 54). The letters and speech segments of the word corresponding to the extracted code are also retrieved from list A (step 56).

If the MSB of an entry being checked is not equal to 1, then the letters and speech segment codes for that entry are retrieved from the received string (step 58).

In the following reference is made both to Fig. 2 and Fig. 7. A complete message is formed in RAM **9** from the retrieved letters and speech segments (step 60). The message takes on two forms. One, is in text form for displaying on the LCD **11** and the other is in speech segment form for conversion to an audio signal for an audio rendering of the message via loudspeaker **15**. By appropriate depression of keys on the keyboard **12** the text message can be visually displayed (step 62), or audio conversion software (**18, 19** in Fig. 3) is applied to the speech segments to obtain voice samples (step 64) which are transferred to a digital-to-analog circuit and amplifier (**10, 15** in Fig. 2 and step 66 in Fig. 7). If desired both a visual and an audio display can be requested.

To exemplify the use of lists A, B and C, consider the following sentence:

YOUR BUDDY ABDULLAH.

It should be noted that for the sake of illustration a Hexadecimal base is used for the codes.

The word YOUR belongs to list A and is therefore represented by the Hex code ODAC. However, since it belongs to list A, a 1 has to be added to its MSB hence it will be transmitted as 8D,AC where the comma differentiates between consecutive bytes.

The word BUDDY belongs to list B and would be transmitted as follows:

05,04,66,85,68,68,89,00,0A,03,58,00,14,00,32

where the first byte 05 is the number of letters in the word and the second byte 04 is the number of speech segments in the word. The five numbers that follow the first two bytes, that is 66,85,68,68,89 are the ASCII values of the letters B, U, D, D, Y respectively. The remaining eight bytes are the Hexadecimal representation of the coded values of the speech segments of the word BUDDY and are taken directly from list B.

The word ABDULLAH belongs neither to list A nor to list B and would be transmitted as follows:

08,05,65,66,68,85,76,76,65,72,00,03,00,0A,00,14,01,F5

where the first byte 08 is the number of letters in the word and the second byte 05 is the number of speech segments in the word. The eight numbers following the first two bytes are the ASCII values of the letters A, B, D, U, L, L, A, H respectively. The remaining eight bytes are the Hexadecimal representation of the coded values of the speech segments of the word ABDULLAH. Since the word ABDULLAH belongs neither to list A nor to list B, a text-to-speech segment conversion procedure has to be applied to the word in order to obtain the speech segments. The codes for these speech segments are obtained from list C. It should be noted, that since neither the word BUDDY nor the word ABDULLAH belong to list A, then in neither of these cases is a 1 added to the MSB of the first byte of the string of bytes representing the word.

The three lists A, B and C are stored by all communicating units, i.e. both by the MDT's and by the dispatcher. It should be noted that words belonging to list A are fully coded, in the sense that the word together with its speech segments are represented by a code of two bytes, no matter how long the word is. Words not belonging to list A are partially coded in the sense that although the letters of the words are transmitted in full, the speech segments are coded, each speech segment being represented by two bytes. For words not belonging to list A, the difference between those words that belong to list B and those that do not, is that for words belonging to list B the speech segments are known, whereas for words that do not belong to list B the speech segments of the words are not known and a text-to-speech segment procedure has to be applied to them to obtain the speech segments. In all cases, a further saving is noted in that the space between words does not have to be recorded in the string to be transmitted.

As well as being coded, or as an alternative to being coded, The transmission data can also be compressed using, e.g, the Ziv-Lempel technique. Compressing and ensuing decompressing of transmission data is performed by a compressor and decompressor, respectively, which are incorporated in micro-controller 6 (Fig. 2).

The reason for not including all words in list A is simply due to memory limitations, hence list C is always required. List B is useful for saving the computational time required by the text-to-speech segment procedure. In general, the contents of lists A and B are not rigid and periodic review of the statistics of the usage of words is carried out and the lists are appropriately updated.

Although in the foregoing description the use of the English language was exemplified for speech-to-text conversion as applied to an MDT, it is clear that the description applies equally well to other languages by using a suitable set of rules for transforming parsed words and syllables of that language into their phonetic representation.

It will be appreciated that although the conversion of text data to an audio signal representative of synthesized speech or of human speech has been illustrated with respect to mobile data terminals, it is by no means restricted to the latter and can equally well be applied to any type of mobile computer, from a small two way pager device with a proprietary operating system via a PDA type terminal to a full electronic notebook, laptop computer and the like.

TABLE 1

| WORD | SPEECH SEGMENT |
|---|---|
| A | a- |
| . . . | . . . |
| BUDDY | b u d//e- |
| . . . | . . . |
| ZOO | zoo^// |

TABLE 2

| HEXCODE | DECIMAL CODE | WORD | SPEECH SEGMENT |
|---|---|---|---|
| 00 01 | 1 | AT | at// |
| 00 02 | 2 | ALL | o^l// |
| 00 03 | 3 | CALL | ko^l |
| | . . . | | |
| 00 06 | 6 | MR. | mi^s ter// |
| | . . . | | |
| 03E8 | 1,000 | THE | tae-// |
| | . . . | | |
| DAC | 3,500 | YOUR | y o^r// |

7

TABLE 3

| HEX CODE | DECIMAL CODE | SPEECH SEGMENT |
|---|---|---|
| 00 01 | 1 | a- |
| | . | |
| | . | |
| 00 03 | 3 | a |
| | . | |
| 00 0A | 10 | b |
| | . | |
| 00 0D | 13 | d |
| | . | |
| 00 14 | 20 | du |
| | . | |
| 00 32 | 50 | //e- |
| | . | |
| 00 3F | 63 | f |
| | . | |
| 00 4B | 75 | //i |
| | . | |
| 01 F4 | 500 | l |
| | . | |
| 01 F5 | 501 | lu// |
| | . | |
| 02 08 | 520 | o^r |
| | . | |
| 02 12 | 530 | t// |
| | . | |
| 02 42 | 578 | tae⁻// |
| | . | |
| 02 B5 | 693 | s |
| | . | |
| 03 58 | 856 | u |
| | . | |
| 04 3F | 1,087 | y |

APPENDIX

**** Special symbols ****

```
#    One or more vowels [AEIOUY]
+    One of E, I, Y: a front vowel
:    Zero or more consonants [BCDFGHJKLMNPQRSTVWXZ]
^    One consonant
.    One of B, V, D, G, J, L, M, N, R, W, Z: a voiced
     consonant
%    One of ER, E, ES, ED, ING, ELY: a suffix
&    One of S, C, G, Z, X, J, CH, SH: a siblant
@    One of T, S, R, D, L, Z, N, J, TH, CH, SH:
     a consonant influencing following u
```

**** A rules ****

```
 1   //A/ / = 'UH'
 2   / /ARE/ / = 'AH-R'
 3   / /AR/O/ = 'UH-R'
 4   //AR/#/ = 'EH-R'
 5   / ^/AS/#/ = 'EY-S'
 6   //A/WA/ = 'UH'
 7   //AW// = 'AW'
 8   / :/ANY// = 'EH-N-EE'
 9   //A/^+#/ = 'EY'
10   /#:/ALLY// = 'UH-L-EE'
11   / /AL/#/ = 'UH-L'
12   //AGAIN// = 'UH-G-EH-N'
13   /#:/AG/E/ = 'IH-J'
14   //A/^+:#/ = 'AE'
15   / :/A/^+/ = 'EY'
16   / /ARR// = 'UH-R'
17   //ARR// = 'AE-R'
18   / :/AR// = 'AH-R'
19   //AR/ / = 'ER'
20   //AR// = 'AH-R'
21   //AIR// = 'EH-R'
22   //AI// = 'EY'
23   //AY// = 'EY'
24   //AU// = 'AW'
25   /#:/AL/ / = 'UH-L'
26   /#:/ALS/ / = 'UH-L-Z'
27   //ALK// = 'AW-K'
28   //AL/^/ = 'AW-L'
29   / :/ABLE// = 'EY-B-UH-L'
30   //ABLE// = 'UH-B-UH-L'

31   //ANG/+/ = 'EY-N-J'
32   / C/ATHE/ / = 'AE-TH-EE'
33   //A// = 'AE'
```

**** B rules ****

```
 1   / /BE/^#/ = 'B-IH'
 2   //BEING// = 'B-EE-IH-NG'
 3   / /BOTH/ / = 'B-OH-TH'
 4   / /BUS/#/ = 'B-IH-Z'
 5   //BUIL// = 'B-IH-L'
 6   //B// = 'B'
```

**** C rules ****

```
 1   / /CH/^/ = 'K'
 2   /^E/CH// = 'K'
 3   //CH// = 'CH'
 4   / S/CI/#/ = 'S-I'
 5   //CI/A/ = 'SH'
 6   //CI/O/ = 'SH'
 7   //CI/EN/ = 'SH'
 8   //C/+/ = 'S'
 9   //CK// = 'K'
10   //COM/%/ = 'K-AH-M'
11   //C// = 'K'
```

**** D rules ****

```
 1   /#:/DED/ / = 'D-IH-D'
 2   /.E/D/ / = 'D'
 3   /#^:E/D/ / = 'T'
 4   / /DE/^#/ = 'D-IH'
 5   / /DO/ / = 'D-OO'
 6   / /DOES// = 'D-UH-Z'
 7   / /DOING// = 'D-OO-IH-NG'
 8   / /DOW// = 'D-OW'
 9   //DU/A/ = 'J-OO'
10   //D// = 'D'
```

```
**** E rules ****                        **** H rules ****

  1  /#:/E/ / = ''                         1  / /HAV// = 'H-AE-V'
  2  /'^:/E/ / = ''                        2  / /HERE// = 'H-EE-R'
  3  / :/E/ / = 'EE'                       3  / /HOUR// = 'OW-ER'
  4  /#/ED/ = 'D'                          4  //HOW// = 'H-OW'
  5  /#:/E/D / = ''                        5  //H/#/ = 'H'
  6  //EV/ER/ = 'EH-V'                     6  //H// = ''
  7  / EL/EVEN// = 'EH-V-EH-N'          **** I rules ****
  8  / S/EVEN// = 'EH-V-EH-N'
  9  //E/^%/ = 'EE'                        1  / /IN// = 'IH-N'
 10  //E/PH%/ = 'EE'                       2  / /I/ / = 'I'
 11  //ERI/#/ = 'EE-R-EE'                  3  //IN/D/ = 'I-N'
 12  /#:/ER/#/ = 'ER'                      4  //IER// = 'EE-ER'
 13  //ER/#/ = 'EH-R'                      5  /#:R/IED// = 'EE-D'
 14  //ER// = 'ER'                         6  //IED/ / = 'I-D'
 15  / /EVEN// = 'EE-V-EH-N'               7  //IEN// = 'EE-EH-N'
 16  /#:/E/W/ = ''                         8  //IE/T/ = 'I-EH'
 17  /@/EW// = 'OO'                        9  / :/I/%/ = 'I'
 18  //EW// = 'Y-OO'                      10  //I/%/ = 'EE'
 19  //E/O/ = 'EE'                        11  //IE// = 'EE'
 20  /#:@/ES/ / = 'IH-Z'                  12  /N/INE// = 'I-N'
 21  /#:/E/S / = ''                       13  /T/IME// = 'I-M'
 22  /#:/ELY// = 'L-EE'                   14  //I/^+:#/ = 'IH'
 23  /#:/EMENT// = 'M-EH-N-T'             15  //IR/#/ = 'I-R'
 24  //EFUL// = 'F-U-L'                   16  //IS/%/ = 'I-S'
 25  //EE// = 'EE'                        17  //IX/%/ = 'IH-K-S'
 26  //EARN// = 'ER-N'                    18  //IZ/%/ = 'I-Z'
 27  / /EAR/^/ = 'ER'                     19  //I/D%/ = 'I'
 28  //EAD// = 'EH-D'                     20  /+^/I/^+/ = 'IH'
 29  /#:/EA/ / = 'EE-UH'                  21  //I/T%/ = 'I'
 30  //EA/SU/ = 'EH'                      22  /#^:/I/^+/ = 'IH'
 31  //EA// = 'EE'                        23  //I/^+/ = 'I'
 32  //EIGH// = 'EY'                      24  //IR// = 'ER'
 33  //EI// = 'EE'                        25  //IGH// = 'I'
 34  / /EYE// = 'I'                       26  //ILD// = 'I-L-D'
 35  //EY// = 'EE'                        27  //IGN/ / = 'I-N'
 36  //EU// = 'Y-OO'                      28  //IGN/^/ = 'I-N'
 37  //E// = 'EH'                         29  //IGN/%/ = 'I-N'
                                          30  //IQUE// = 'EE-K'
**** F rules ****                         31  //I// = 'IH'

  1  //FUL// = 'F-U-L'               **** J rules ****
  2  //F// = 'F'
                                          1  //J// = 'J'
**** G rules ****
                                    **** K rules ****
  1  //GIV// = 'G-IH-V'
  2  / /G/I^/ = 'G'                        1  //K/N/ = ''
  3  //GE/T/ = 'G-EH'                      2  //K// = 'K'
  4  /SU/GGES// = 'G-J-EH-SS'
  5  //GG// = 'G'                    **** L rules ****
  6  / B#/G// = 'G'
  7  //G/+/ = 'J'                          1  //LO/C#/ = 'L-OH'
  8  //GREAT// = 'G-R-EY-T'
  9  /#/GH// = ''                          2  /L/L// = ''
 10  //G// = 'G'                           3  /#^:/L/%/ = 'UH-L'
                                           4  //LEAD// = 'L-EE-D'
                                           5  //L// = 'L'
```

10

```
**** M rules ****                          42  /^:/O/N/  =  'UH'
                                           43  /I/ON//  =  'UH-N'
   1   //MOV//  =  'M-OO-V'                44  /#:/ON/ /  =  'UH-N'
   2   //M//  =  'M'
                                           45  /#^/ON//  =  'UH-N'
**** N rules ****                          46  //O/ST /  =  'OH'
                                           47  //OF/^/  =  'AW-F'
   1   /E/NG/+/  =  'N-J'                  48  //OTHER//  =  'UH-TH-ER'
   2   //NG/R/  =  'NG'                    49  //OSS/ /  =  'AW-S'
   3   //NG/#/  =  'NG'                    50  /#^:/OM/ /  =  'UH-M'
   4   //NGL/%/  =  'NG-UH-L'             51  //O//  =  'AH'
   5   //NG//  =  'NG'
   6   //NK//  =  'N-K'                   **** P rules ****
   7   / /NOW/ /  =  'N-OW'
   8   //N//  =  'N'                        1   //PH//  =  'F'
                                            2   //PEOP//  =  'P-EE-P'
                                            3   //POW//  =  'P-OW'
**** O rules ****                           4   //PUT/ /  =  'P-U-T'
                                            5   //P//  =  'P'
   1   //OF/ /  =  'UH-V'
   2   //OROUGH//  =  'ER-OH'            **** Q rules ****
   3   / F/OR/TY/  =  'OH-R'
   4   /#:/OR/ /  =  'ER'                   1   //QUAR//  =  'K-W-AW-R'
   5   /#:/ORS/ /  =  'ER-Z'                2   //QU//  =  'K-W'
   6   //OR//  =  'AW-R'                    3   //Q//  =  'K'
   7   / /ONE//  =  'W-UH-N'
   8   //OW/EL/  =  'OW'                 **** R rules ****
   9   //OW//  =  'OH'
  10   / /OVER//  =  'OH-V-ER'             1   / /RE/^#/  =  'R-EE'
  11   //OV//  =  'UH-V'                    2   //R//  =  'R'
  12   //O/^%/  =  'OH'
  13   //O/^EN/  =  'OH'
  14   //O/^I#/  =  'OH'
  15   //OL/D/  =  'OH-L'
  16   //OUGHT//  =  'AH-T'
  17   //OUGH//  =  'UH-F'
  18   / /OU/^L/  =  'UH'
  19   / /OU//  =  'OW'
  20   /H/OU/S#/  =  'OW'
  21   //OUS//  =  'UH-S'
  22   / F/OUR//  =  'OH-R'
  23   //OUR//  =  'AW-R'
  24   //OUD//  =  'U-D'
  25   //OUP//  =  'OO-P'
  26   //OU//  =  'OW'
  27   //OY//  =  'AW-EE'
  28   //OING//  =  'OH-IH-NG'
  29   //OI//  =  'AW-EE'
  30   //OOR//  =  'OH-R'
  31   //OOK//  =  'U-K'
  32   //OOD//  =  'U-D'
  33   //OO//  =  'OO'
  34   //O/E/  =  'OH'
  35   //O/ /  =  'OH'
  36   //OA/ /  =  'OH'
  37   / /ONLY//  =  'OH-N-L-EE'
  38   / /ONCE//  =  'W-UH-N-S'
  39   //ON'T/ /  =  'OH-N-T'
  40   /C/O/N/  =  'AH'
  41   //O/NG/  =  'AH'
```

```
**** S rules ****                          **** U rules ****

  1  //SH// = 'SH'                          1  / /UN/I/ = 'Y-OO-N'
  2  /#/SION// = 'ZH-UH-N'                   2  / /UN// = 'UH-N'
  3  //SOME// = 'S-AH-M'                      3  / /UPON// = 'UH-P-AW-N'
  4  /#/SUR/#/ = 'ZH-ER'                      4  /@/UR/#/ = 'ER'
  5  //SUR/#/ = 'SH-ER'                       5  //UR/#/ = 'Y-ER'
  6  /#/SU/#/ = 'ZH-OO'                       6  //UR// = 'ER'
  7  /#/SSU/#/ = 'SH-OO'                      7  //U/^ / = 'UE'
  8  /#/SED/ / = 'Z-D'                        8  //U/^^/ = 'UH'
  9  /#/S/#/ = 'Z'                            9  //UY// = 'I'
 10  //SAID// = 'S-EH-D'                     10  / G/U/#/ = ''
 11  /^/SION// = 'SH-UH-N'                   11  /G/U/#/ = ''
 12  //S/S/ = ''                             12  /G/U/#/ = 'W'
 13  /./S/ / = 'Z'                           13  /#N/U// = 'Y-OO'
 14  /#:.E/S/ / = 'Z'                        14  /@/UI// = 'OO'
 15  /#^:##/S/ / = 'Z'                       15  /@/U// = 'OO'
 16  /#^:#/S/ / = 'S'                        16  //U// = 'Y-OO'
 17  /U/S/ / = 'S'
 18  / :#/S/ / = 'Z'                       **** V rules ****
 19  / /SCH// = 'S-K'
 20  //S/C+/ = ''                            1  //VIEW// = 'V-Y-OO'
 21  /#/SM// = 'Z-M'                          2  //V// = 'V'
 22  /#/SN/ / = 'Z-UH-N'
 23  //S// = 'S'                          **** W rules ****

**** T rules ****                          1  / /WHERE// = 'W-ER'
                                            2  //WA/S/ = 'W-AH'
  1  / /THE/ / = 'TH-UH'                     3  //WA/T/ = 'W-AH'
  2  //TO/ / = 'T-OO'                        4  //WHERE// = 'WH-EH-R'
  3  //THAT// = 'TH-AE-T'                    5  //WHAT// = 'WH-AH-T'
  4  / /THIS/ / = 'TH-IH-S'                  6  //WHOL// = 'H-OH-L'
  5  / /THEY/ / = 'TH-EY'                    7  //WHO// = 'H-OO'
  6  / /THERE// = 'TH-EH-R'                  8  //WH// = 'WH'
  7  //THER// = 'TH-ER'                      9  //WAR// = 'W-AH-R'
  8  //THEIR// = 'TH-EH-R'                  10  //WOR// = 'W-ER'
  9  / /THAN/ / = 'TH-AE-N'                 11  //WR// = 'R'
 10  / /THEM/ / = 'TH-EH-M'                 12  //W// = 'W'
 11  //THESE/ / = 'TH-EE-Z'
 12  / /THEN// = 'TH-EH-N'               **** X rules ****
 13  //THROUGH// = 'TH-R-OO'
 14  //THOSE// = 'TH-OH-Z'                   1  //X// = 'X-S'
 15  //THOUGH/ / = 'TH-OH'
 16  / /THUS// = 'TH-UH-S'              **** Y rules ****
 17  //TH// = 'TH'
 18  /#:/TED/ / = 'T-IH-D'                   1  //YOUNG// = 'Y-UH-NG'
                                            2  / /YOU// = 'Y-OO'
                                            3  / /YES// = 'Y-EH-S'
 19  /S/TI/#N/ = 'CH'                        4  / /Y// = 'Y'
 20  //TI/O/ = 'SH'                          5  /#^:/Y/ / = 'EE'
 21  //TI/A/ = 'T'                           6  /#^:/Y/I/ = 'EE'
 22  //TIEN// = 'SH-UH-N'                    7  / :/Y/ / = 'I'
 23  //TUR/#/ = 'CH-ER'                      8  / :/Y/#/ = 'I'
 24  //TU/A/ = 'CH-OO'                       9  / :/Y/^+:#/ = 'IH'
 25  / /TWO// = 'T-OO'                      10  / :/Y/^#/ = 'I'
 26  //T// = 'T'                            11  //Y// = 'IH'
```

```
**** Z rules ****

1  //ZZ// = 'T-Z'
2  //Z// = 'Z'

**** Misc. rules ****

1  //'// = ''
2  // // = ' '
3  //,// = ' '
4  //;// = ' '
5  //:// = ' '
6  //.// = ' '


7  //!// = ' '
8  //?// = ' '
```

## Claims

1. A mobile data terminal for receiving and converting transmission data indicative of text data strings into an audible signal comprising:

   a receiver for receiving said transmission data through a communication network;
   a first memory for storing said received transmission data;
   a processor for obtaining from said stored transmission data speech segments corresponding to said text data strings; and
   an audio generator for generating audible signals representative of said speech segments.

2. The mobile data terminal according to Claim 1, wherein said transmission data includes data indicative of words.

3. The mobile data terminal according to Claim 2, wherein said transmission data includes data indicative of speech segments.

4. The mobile data terminal according to any one of the preceding claims, wherein said transmission data includes data indicative of text segments and wherein said data indicative of text segments are associated with at least one of syllables and words.

5. The mobile data terminal according to any one of the preceding claims, wherein said communication network is associated with at least one of Cellular Digital Packet Data (CDPD), satellite, Mobitex data, Ardis data, Specialized Mobile Radio, GSM, PCS.

6. The mobile data terminal according to any one of the preceding claims, wherein said transmission data is coded, and wherein said mobile data terminal further includes a decoder, and wherein said coded transmission data is decoded in said mobile data terminal.

7. The mobile data terminal according to Claim 6, wherein said words are classified to at least two groups, a first group including a priori known words, constituting first group of words, and a second group including new words, constituting second group words, and wherein the transmission data with respect to each one of the first group words is a code representative of speech segments that correspond to a complete first group word, and the transmission data with respect to each one of the second group words is at least one code the or each code being representative of a respective speech segment that corresponds to at least a portion of said second group word.

8. The mobile data terminal according to Claim 7, wherein speech segments that correspond to a first group word are extracted from said coded transmission data and said mobile data terminal further includes a feeder for feeding said extracted speech segments to said audio generator for generating audio signals representative of said speech segments.

9. The mobile data terminal according to Claim 7, wherein speech segments that correspond to a second group word are extracted from said coded transmission data and said mobile data terminal further includes a feeder for feeding said extracted speech segments to said audio generator for generating audio signals representative of said speech segments.

10. The mobile data terminal according to any one of the preceding Claims, wherein said audible signals are associated with at least one of synthesized speech signals, speech signals.

11. The mobile data terminal according to any one of the preceding claims, wherein said transmission data is compressed and wherein said mobile data terminal further comprises a decompressor for decompressing said compressed transmission data.

12. The mobile data terminal according to any one of the preceding claims, wherein said mobile data terminal further comprises:

    a transmitter for transmitting transmission data;
    a coder for coding transmission data; and
    a compressor for compressing transmission data.

13. A method for transmitting, receiving and converting transmission data indicative of text data strings originated by or received from a first device, into audible signals indicative of said data text strings in at least one second device; either or both of said first device and the at least one second device being a mobile data terminal mountable on a mobile platform; at least one of said first device and said second device includes a table of speech segments corresponding each to a word or a portion thereof; the method comprising the following steps:

    (i) reducing said text data strings to words;
    (ii) associating with said words corresponding speech segments;
    (iii)transmitting through a communication network from said first device to the at least one second device said transmission data;
    (iv) receivin, through said communication network, in the or each one of said second devices said transmission data;
    (v) generating in said at least one second device audio signals representative of said speech segments.

14. The method according to Claim 13, wherein said step (i) is executed in said first device.

15. The method according to Claim 14, wherein said step (ii) is executed in said first device.

16. The method according to Claim 14, wherein said step (ii) is executed in said at least one second device.

17. The method according to Claim 13, wherein said steps (i) and (ii) are executed in said at least one second device.

18. The method according to Claim 13, wherein said transmission data includes data indicative of words.

19. The method according to any one of Claims 13 and 17, wherein said transmission data includes data indicative of speech segments.

20. The method according to any one of Claims 13, 18 and 19, wherein said transmission data includes data indicative of text segments and wherein said data indicative of text segments are associated with at least one of syllables and words.

21. The method according to any one of Claims 13 to 20, wherein said communication network is associated with at least one of Cellular Digital Packet Data (CDPD), satellite, Mobitex data, Ardis data, Specialized Mobile Radio, GSM, PCS.

22. The method according to any one of Claims 13 to 21, wherein said transmission data is coded, and wherein said coded transmission data is decoded in said at least one second device.

23. The method according to Claim 22, wherein said words are classified to at least two groups, a first group including a priori known words, constituting first group of words, and a second group including new words, constituting second group words, and wherein the transmission data with respect to each one of the first group words is a code representative of speech segments that correspond to a complete first group word, and the transmission data with respect to each one of the second group words is at least one code representative of a respective speech segment that corresponds to at least a portion of said second group word.

24. The method according to Claim 23, wherein speech segments that correspond to a first group word are extracted from said coded transmission data and said mobile data terminal further includes a feeder for feeding said extracted speech segments to said audio generator for generating audio signals representative of said speech segments.

25. The method according to Claim 23, wherein speech segments that correspond to a second group word are extracted from said coded transmission data and said mobile data terminal further includes a feeder for feeding said extracted speech segments to said audio generator for generating audio signals representative of said speech segments.

26. The method according to any one of Claims 13 to 25, wherein said audible signals are associated with at least one of synthesized speech signals, speech signals.

EP 0 776 097 A2

Fig.1

Fig.2

EP 0 776 097 A2

TEXT
_ STRING

**16**

SEPARATION
TO WORDS

WORDS

**17**

WORDS TO
TEXT SEGMENTS,
AND
TEXT SEGMENTS
CONVERSION TO
SPEECH SEGMENTS,
RELATED TO SEGMENT
PLACEMENT IN WORD

SPEECH
SEGMENTS

**19**

PRE - RECORDED
VOICE SEGMENTS
BANK

**18**

EACH SPEECH SEGMENT
FITTED TO
PRE - RECORDED
VOICE SEGMENT

VOICE
SAMPLES

**20**

D/A AND
AUDIO AMPLIFIER

Fig . 3

17

FIG.4

FIG.5

ENTER MESSAGE
THROUGH KEYBOARD — 30

↓

SEPARATE MESSAGE
INTO WORDS — 32

↓

FOR
EACH WORD DOES
WORD BELONG
TO LIST A ? — 34

NO ← → YES

**NO branch:**

DOES
WORD BELONG
TO LIST B ? — 38

NO ↓   YES →

APPLY TO
WORD TEXT
TO SPEECH
SEGMENT
CONVERSION — 42

↓

PREPARE
STRING OF
LETTERS AND
CODED SPEECH
SEGMENTS
FROM LIST C — 44

**YES branch (List B):**

PREPARE
STRING OF
LETTERS AND
CODED SPEECH
SEGMENTS
FROM LIST B — 40

↓

REGISTER THE
NUMBER OF
LETTERS IN
THE WORD AND
THE NUMBER
OF SPEECH
SEGMENTS — 46

**YES branch (List A):**

RETRIEVE THE WORD'S
CODE FROM LIST A
AND ADD 1 TO
THE CODE'S MSB — 36

↓

CONSTRUCT CODED STRING
REPRESENTING THE COMPLETE
MESSAGE AND TRANSMIT STRING — 48

FIG.6

FIG.7

```
                    ┌─────────────────┐
                    │ RECEIVE STRING  │──── 50
                    └─────────────────┘
                             │
                             ▼
                        ╱╲
                      ╱      ╲ ──── 52
                    ╱   FOR    ╲
                  ╱  EACH ENTRY  ╲
        NO      ╱ IN STRING DOES  ╲    YES
    ◄─────────  │  ENTRY BELONG   │ ─────────►
                  ╲  TO LIST A ?  ╱
                    ╲          ╱
                      ╲      ╱
                        ╲  ╱
```

RECEIVE STRING — 50

FOR EACH ENTRY IN STRING DOES ENTRY BELONG TO LIST A ? — 52

NO / YES

58 —
RETRIEVE FROM STRING THE LETTERS OF THE WORD AND THE SPEECH SEGMENT CODES

EXTRACT FROM STRING CODE BELONGING TO LIST A — 54

56 —
RETRIEVE FROM LIST A THE LETTERS AND SPEECH SEGMENTS OF THE WORD CORRESPONDING TO THE CODE

PREPARE IN RAM THE COMPLETE MESSAGE IN TWO FORMS:
(1) FOR PRINTING ON SCREEN
(2) FOR CONVERTING TO AUDIO SIGNAL — 60

IF DESIRED, SEND FORM (1) FOR DISPLAYING ON SCREEN — 62

APPLY AUDIO CONVERSION TO FORM (2) TO OBTAIN VOICE SAMPLES — 64

APPLY D/A AND AUDIO AMPLIFIER TO VOICE SAMPLES — 66